# EUROPÄISCHE PATENTANMELDUNG

(11) **EP 3 922 356 A1**
(43) Veröffentlichungstag der Anmeldung: **15.12.2021**
(21) Anmeldenummer: 21178448.3
(22) Anmeldetag: 09.06.2021
(51) Int. Cl.: B02C 19/00, B30B 9/32

(54) **VORRICHTUNG ZUR ZERKLEINERUNG VON GLASWARE UND/ODER BLECHWARE**

(30) Priorität: 10.06.2020 DE 102020115488
(71) Anmelder: Holzner, Kristiena, 83083 Riedering (DE)
(72) Erfinder: Bogenrieder, Rainer, 83253 Greimharting (DE)
(74) Vertreter: Nowack, Linda

(57) **Zusammenfassung**

Vorgeschlagen wird eine Vorrichtung zur Zerkleinerung von Glasware und/oder Blechware, wobei die Vorrichtung zur Anordnung in oder auf einem entsprechenden Entsorgungscontainer vorgesehen ist. Die Vorrichtung weist einen Aufnahmeraum mit zumindest teilweise geschlossenem Boden zur Aufnahme der Glasware und/oder Blechware auf, sowie eine Einführöffnung in den Aufnahmeraum, und einen an den Aufnahmeraum direkt anschließenden Zerkleinerungsbereich auf, der zumindest teilweise eine Bodenöffnung aufweist. Ferner weist sie eine Wurfvorrichtung auf, die in einer Ruheposition an einem vom Zerkleinerungsbereich entfernten Bereich des Aufnahmeraums angeordnet ist, sowie Führungsmittel, an denen die Wurfvorrichtung befestigt ist, und die derart angeordnet sind, dass sie die Wurfvorrichtung von der Ruheposition in eine Endposition und wieder zurück führen können. Ferner ist ein Betätigungshebel vorgesehen, der in einer Anfangsposition ist, wenn sich die Wurfvorrichtung in der Ruheposition befindet, sowie Zerkleinerungsmittel, die in einem vorgegebenen Abstand zum Aufnahmeraum befestigt sind und mindestens einen Teilbereich der Bodenöffnung überlappen. Außerdem ist eine Spannvorrichtung vorgesehen, die derart mit der Wurfvorrichtung und dem Betätigungshebel in Wirkverbindung ist, dass sie bei Betätigen des Betätigungshebels freigegeben wird und die Wurfvorrichtung dabei in Richtung der Zerkleinerungsmittel bis zum Erreichen der Endposition beschleunigt wird, wobei dadurch Glasware und/oder Blechware, die sich im Aufnahmeraum befindet, auf die Zerkleinerungsmittel trifft und die Vorrichtung durch die Bodenöffnung verlässt.

## Beschreibung

Die Erfindung betrifft eine Vorrichtung zur Zerkleinerung von Glasware und/oder Blechware.

Die Entsorgung von Glasware und/oder Blechware, also z.B. von Flaschen und Dosen, erfolgt durch den Endverbraucher in der Regel in entsprechenden Entsorgungscontainern. Diese werden von den zuständigen Behörden regelmäßig geleert. Jede Leerung kostet Geld und benötigt entsprechende Fahrzeuge, welche Abgase ausstoßen und somit die Umwelt belasten.

Es sind bereits Gerätschaften zum Zusammendrücken von Aluminiumdosen z.B. aus der DE 3 332 451 A1, oder zum Zerkleinern von Glasware z.B. aus der DE 4 223 053 A1 oder der DE 34 42 589 A1 oder zum Zertrümmern von Glas und/oder Metallwaren z.B. aus der DE 19 911 071 A1 oder der DE 20 110 325 U1 bekannt.

Außerdem ist aus der DE 10 2018 115 140.3 A1 der Anmelderin eine Vorrichtung zur Zerkleinerung von Glasware und/oder Blechware bekannt, die einen Einführbereich mit einer Einwurföffnung und einer Schutzklappe aufweist. Ferner ist ein Betätigungshebel vorgesehen, in dessen Offenstellung ein Gut zum Zerkleinern eingeworfen werden kann und in dessen Geschlossenstellung das Gut zerkleinert wird. Somit kann das Volumen des Entsorgungscontainers besser ausgenutzt werden und Nutzer vor Verletzungen geschützt werden. Allerdings ist diese Vorrichtung konstruktiv relativ aufwändig.

In der US 2 225 934 A1 wird ebenfalls eine Vorrichtung zur Zerkleinerung von Glasware offenbart. Hier werden Flaschen bestimmter Beschaffenheit, also keine Dosen und keine Flaschen mit Deckel, auf einen Stab aufgesteckt und dann durch einen Drehmechanismus auf Zerkleinerungsmittel gestoßen. Auch diese Vorrichtung ist konstruktiv relativ aufwändig und auf bestimmte Flaschen beschränkt.

Deshalb ist es eine Aufgabe dieser Erfindung, eine verbesserte Vorrichtung zur Zerkleinerung von Glasware und/oder Blechware bereitzustellen. Diese Aufgabe wird erfindungsgemäß durch die Merkmale der unabhängigen Patentansprüche gelöst. Vorteilhafte Ausgestaltungen sind Gegenstand der abhängigen Ansprüche.

Vorgeschlagen wird eine Vorrichtung zur Zerkleinerung von Glasware und/oder Blechware, wobei die Vorrichtung zur Anordnung in oder auf einem entsprechenden Entsorgungscontainer vorgesehen ist. Die Vorrichtung weist einen Aufnahmeraum mit zumindest teilweise geschlossenem Boden zur Aufnahme der Glasware und/oder Blechware auf, sowie eine Einführöffnung in den Aufnahmeraum, und einen an den Aufnahmeraum direkt anschließenden Zerkleinerungsbereich auf, der zumindest teilweise eine Bodenöffnung aufweist. Ferner weist sie eine Wurfvorrichtung auf, die in einer Ruheposition an einem vom Zerkleinerungsbereich entfernten Bereich des Aufnahmeraums angeordnet ist, sowie Führungsmittel, an denen die Wurfvorrichtung befestigt ist, und die derart angeordnet sind, dass sie die Wurfvorrichtung von der Ruheposition in eine Endposition und wieder zurück führen können. Ferner ist ein Betätigungshebel vorgesehen, der in einer Anfangsposition ist, wenn sich die Wurfvorrichtung in der Ruheposition befindet, sowie Zerkleinerungsmittel, die in einem vorgegebenen Abstand zum Aufnahmeraum befestigt sind und mindestens einen Teilbereich der Bodenöffnung überlappen. Außerdem ist eine Spannvorrichtung vorgesehen, die derart mit der Wurfvorrichtung und dem Betätigungshebel in Wirkverbindung ist, dass sie bei Betätigen des Betätigungshebels freigegeben wird und die Wurfvorrichtung dabei in Richtung der Zerkleinerungsmittel bis zum Erreichen der Endposition beschleunigt wird, wobei dadurch Glasware und/oder Blechware, die sich im Aufnahmeraum befindet, auf die Zerkleinerungsmittel trifft und die Vorrichtung durch die Bodenöffnung verlässt.

Durch die vorgeschlagene Vorrichtung kann die vom Nutzer aufgewendete Kraft sehr effizient verwendet werden, um die zu entsorgende Glas- und/oder Blechware zu zerkleinern. Außerdem kann das Volumen des Entsorgungscontainers besser ausgenutzt werden. Somit werden weniger Leerungen als bisher benötigt und damit sowohl Geld gespart, als auch die Umweltbelastung gesenkt.

Unter dem Begriff zerkleinert ist im Fall von Glas zu verstehen, dass dieses durch das Auftreffen auf die Zerkleinerungsmittel in mehrere, vorzugsweise kleine, Teile zerbricht. Im Falle von Dosen, wobei hier vor allem Lebensmitteldosen unter den Begriff fallen, werden diese durch den durch die Wurfvorrichtung und die Zerkleinerungsmittel ausgeübten Druck zerquetscht, so dass ihr Volumen auf einen Bruchteil des vorherigen Volumens sinkt. Die Vorrichtung kann auch für andere Arten von Dosen wie Farbdosen etc. verwendet werden. Wenn Gläser mit Deckel, z.B. Gurkengläser, Senfgläser etc., in den Aufnahmeraum eingebracht werden, wird sowohl das Glas als auch der Deckel, welcher in der Regel aus Blech besteht, zerkleinert. Das Glas wird zerbrochen und der Deckel wird zerquetscht.

Des Weiteren ist vorgesehen, dass die Vorrichtung ferner eine Schutzvorrichtung aufweist, die mit dem Betätigungshebel in Wirkverbindung steht, wobei die Schutzvorrichtung derart angeordnet ist, dass sie in der Anfangsstellung des Betätigungshebels in einer Offenstellung ist, in welcher die Einführöffnung zugänglich ist, und dass sie bei Betätigung des Betätigungshebels in eine geschlossene Stellung bewegt wird, in welcher die Einführöffnung durch die Schutzvorrichtung verdeckt ist.

Des Weiteren ist vorgesehen, dass die Führungsmittel als zwei Schienen ausgeführt sind, die jeweils an einem oberen Endbereich der Wurfvorrichtung 1 befestigt sind, oder als Kugellager ausgeführt sind.

Des Weiteren ist vorgesehen, dass das Führungsmittel über einen Rotationspunkt an einem Endbereich davon drehbar angeordnet ist und der Betätigungshebel über ein Betätigungsmittel an dem Führungsmittel befestigt ist, und wobei die Spannvorrichtung an einem Endbereich davon mit einem ersten Endabschnitt des Führungsmittels und an einem zweiten Endabschnitt davon mit der Wurfvorrichtung derart verbunden ist, dass bei Bewegen des Führungsmittels durch den Betätigungshebel die Spannvorrichtung gespannt wird, und bei Erreichen eines Endpunktes die Wurfvorrichtung freigegeben und die Spannvorrichtung entspannt wird, so dass die Glasware und/oder Blechware, die sich im Aufnahmeraum befindet, auf die Zerkleinerungsmittel trifft und die Vorrichtung durch die Bodenöffnung verlässt.

Des Weiteren ist vorgesehen, dass eine Wippe an dem zweiten Endabschnitt des Führungsmittels derart angeordnet ist, dass es sich zwischen der Wurfvorrichtung und einem gegenüberliegenden Ende erstreckt und dort ein Auslösemittel vorgesehen ist, und wobei an dem Ende der Wippe, an dem sich die Wurfvorrichtung befindet, ein Blockademittel vorgesehen ist, wobei das Führungsmittel entlang der Wippe verschiebbar ist und wobei die Wippe durch Bewegen des Führungsmittels in Richtung des Auslösemittels und bei Erreichen des Auslösemittel derart gekippt wird, dass das Blockademittel von der Wurfvorrichtung entfernt wird und diese damit freigibt.

Des Weiteren ist vorgesehen, dass das Betätigungsmittel als Bowdenzug ausgeführt ist.

Des Weiteren ist vorgesehen, dass eine Schutzvorrichtung vorgesehen ist, die über das Führungsmittel mit dem Betätigungshebel in Wirkverbindung steht, wobei die Schutzvorrichtung derart angeordnet ist, dass sie in der Anfangsstellung des Betätigungshebels in einer Offenstellung ist, in welcher die Einführöffnung zugänglich ist, und dass sie bei Betätigung des Betätigungshebels während der Bewegung des Führungsmittels in eine geschlossene Stellung bewegt wird, in welcher Einführöffnung durch die Schutzvorrichtung verdeckt ist.

Des Weiteren ist vorgesehen, dass ein Sicherungsmittel vorgesehen ist, das derart mit der Schutzvorrichtung und der Wurfvorrichtung in Wirkverbindung steht, dass es die Wurfvorrichtung blockiert, bis die Schutzvorrichtung die Einführöffnung verschlossen hat.

Des Weiteren ist vorgesehen, dass der Betätigungshebel horizontal betätigbar ist, oder vertikal betätigbar ist und hierfür Umlenkmittel vorgesehen sind, die den Betätigungshebel mit der Spannvorrichtung verbinden.

Des Weiteren ist vorgesehen, dass die Zerkleinerungsmittel mehrere, in Richtung des Zerkleinerungsbereichs hervorstehende, spitz zulaufende Einheiten sind.

Des Weiteren ist vorgesehen, dass die Wurfvorrichtung derart gebildet ist, dass sie das Ende des Aufnahmeraums, welches der Einführöffnung gegenüberliegt, begrenzt. Somit kann verhindert werden, dass Glasware und/oder Blechware zu weit eingebracht wird und sich damit nicht in der optimalen Position zum Zerkleinern befindet.

Des Weiteren ist vorgesehen, dass die Vorrichtung maximal bis zu einer gedachten senkrechten Mittellinie des Entsorgungscontainers reicht. Das Gehäuse ist in seiner Größe so gewählt, dass der Aufnahmeraum ein vorgegebenes Volumen oder eine vorgegebene Größe an Glasware oder Blechware aufnehmen kann. Beispielsweise ist der Aufnahmeraum so gewählt, dass Glasware oder Blechware z.B. mit einem Durchmesser von bis zu 130 mm oder 150 mm darin eingebracht werden können. Besonders vorteilhaft ist die Größe der gesamten Vorrichtung so gewählt, dass sie nicht über die gedachte Mittellinie des Entsorgungscontainers reicht, z.B. maximal dem Radius oder halben Breite des Entsorgungscontainers entspricht. Dies ist deshalb vorteilhaft, da solche Entsorgungscontainer in der Regel auf zwei einander gegenüberliegenden Seiten davon Einwurföffnungen aufweisen bzw. von zwei einander gegenüberliegenden Seiten erreichbar sind. Durch die entsprechende Wahl der Größe der Vorrichtung können somit zwei Vorrichtungen an einem Entsorgungscontainer angeordnet werden.

Des Weiteren ist ein Gehäuse vorgesehen, das die Vorrichtung aufnimmt und das an einer ersten Seite davon eine Öffnung als Einführbereich zur Aufnahme der Glasware und/oder Blechware ins Innere des Gehäuses aufweist. Das Gehäuse weist an einer dem Boden des Entsorgungscontainers zugewandten Unterseite des Zerkleinerungsbereichs die Bodenöffnung auf. Durch Bereitstellen eines Gehäuses werden die Komponenten und auch die Nutzer vor Beschädigungen bzw. Verletzungen geschützt und die Vorrichtung kann leichter im oder am Entsorgungscontainer montiert werden.

Vorgeschlagen wird ferner ein Entsorgungscontainer, aufweisend eine darin befestigte beschriebene Vorrichtung, wobei der Entsorgungscontainer mindestens eine Einwurföffnung, sowie eine Hebel-Öffnung und einen Ausschnitt zum Betätigen des Betätigungshebels aufweist, und wobei der Betätigungshebel derart angeordnet ist, dass er mit einem Bedienbereich davon aus der Hebel-Öffnung herausragt.

Vorgeschlagen wird ferner ein Entsorgungscontainer, aufweisend eine darauf befestigte beschriebene, in einem Gehäuse mit einer Hebel-Öffnung und einem Ausschnitt zum Betätigen des Betätigungshebels angeordnete Vorrichtung, wobei der Betätigungshebel derart angeordnet ist, dass er mit einem Bedienbereich davon aus dem Gehäuse herausragt, und wobei der Entsorgungscontainer an einer Oberseite davon mindestens eine, mit der Bodenöffnung der Vorrichtung in Überdeckung gebrachte Öffnung aufweist.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
Fig. 1 zeigt eine stark abstrahierte Schnittansicht einer Vorrichtung der vorliegenden Erfindung.
Fig. 2 zeigt eine schräge Draufsicht auf eine Vorrichtung gemäß einer Ausführung der vorliegenden Erfindung.
Fig. 3 zeigt eine Draufsicht auf eine Vorrichtung gemäß einer weiteren Ausführung der vorliegenden Erfindung.
Fig. 4 zeigt eine schräge Draufsicht auf eine Vorrichtung gemäß einer Ausführung der vorliegenden Erfindung.
Fig. 5 zeigt eine schräge Draufsicht auf eine Vorrichtung gemäß einer alternativen Ausführung der vorliegenden Erfindung.
Fig. 6 zeigt eine detaillierte seitliche Schnittansicht der in Figur 4 gezeigten Vorrichtung.
Fig.en 7 und 8 zeigen detaillierte Ansichten der in Figur 3 gezeigten Vorrichtung.

In den nachfolgenden Figurenbeschreibungen sind gleiche Elemente bzw. Funktionen mit gleichen Bezugszeichen versehen.

Die vorgeschlagene Vorrichtung dient zur Zerkleinerung von Glasware und/oder Blechware 100 und ist zur Anordnung in oder auf einem Entsorgungscontainer vorgesehen. Wenn die Vorrichtung in einem Entsorgungscontainer vorgesehen ist, weist dieser eine Einwurföffnung für Glasware und/oder Blechware 100 auf. Die Vorrichtung weist ebenfalls eine Öffnung für Glasware und/oder Blechware 100 auf, die nachfolgend als Einführöffnung 10 bezeichnet wird. Die Einführöffnung 10 ist mit der Einwurföffnung des Entsorgungscontainers in Überdeckung, wenn die Vorrichtung dort eingebaut ist. Vorteilhaft ist eine Dichtung zwischen den Öffnungen vorgesehen, um die Öffnungen abzudichten und auch zum Ausgleich eines eventuellen Abstands zwischen den Öffnungen. Wenn die Vorrichtung auf einem Entsorgungscontainer vorgesehen ist, benötigt dieser keine Einwurföffnung, aber eine Öffnung auf seiner Oberseite, die mit der Bodenöffnung 3 der Vorrichtung in Überdeckung ist. Auch hier kann zum Schutz, zum Ausgleich eines Abstands etc. eine Dichtung zwischen den Öffnungen vorgesehen sein.

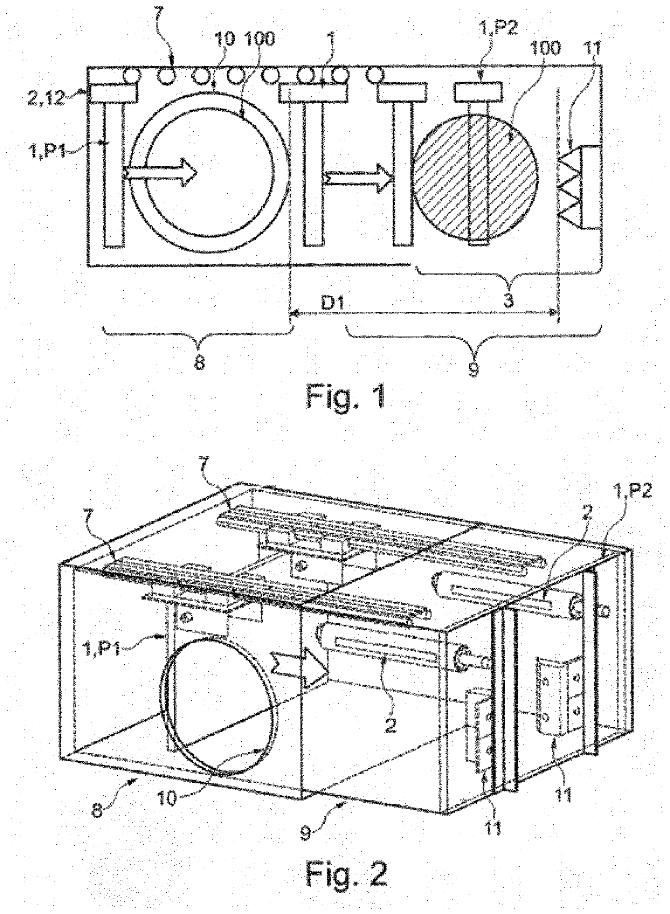

Die Vorrichtung ist als Schnittansicht stark abstrahiert in Figur 1 gezeigt, um das Konzept zu verdeutlichen. Sie ist vorteilhaft als ein Gehäuse mit seitlichen Wänden, sowie Boden gebildet, in dem alle Komponenten zum Ausführen der Zerkleinerung angeordnet sind. Das Gehäuse weist dabei einen Aufnahmeraum 8 zur Aufnahme der Glasware und/oder Blechware 100 auf, die durch die Einführöffnung 10 dort eingebracht werden kann. Der Aufnahmeraum 8 wird zumindest teilweise nach unten hin von einem Boden begrenzt, so dass die Glasware und/oder Blechware 100 dort nach Einbringen zumindest teilweise aufliegt.

Direkt an den Aufnahmeraum 8 anschließend, also nicht davon getrennt, ist ein Zerkleinerungsbereich 9 vorgesehen, in den die Glasware und/oder Blechware 100 vom Aufnahmeraum 8 gestoßen bzw. beschleunigt geführt wird, um dort zerkleinert zu werden. Hierfür weist er in einem Abstand D1 zu dem Aufnahmeraum 8 angeordnete mit Zerkleinerungsmittel 11 auf, auf welche die Glasware und/oder Blechware 100 trifft, wenn sie durch die nachher beschriebene Wurfvorrichtung 1 in den Zerkleinerungsbereich 9 befördert wird. Der Boden des Zerkleinerungsbereichs 9 ist zumindest teilweise offen, weist also eine Bodenöffnung 3 auf. So kann die Glasware und/oder Blechware 100 nach unten fallen und damit den Zerkleinerungsmechanismus wieder freigeben. Der Abstand D1 entspricht mindestens dem maximalen Durchmesser eines zu zerkleinernden Gutes, vorteilhaft mehr als diesem. Die Zerkleinerungsmittel 11 überlappen mindestens einen Teilbereich der Bodenöffnung 3. So können die Stücke nach dem Zerkleinern direkt in den Bereich unterhalb der Bodenöffnung 3 fallen.

Das Konzept der Erfindung, also aller nachfolgend beschriebener Ausführungen, beruht auf dem Prinzip, dass das zu zerkleinernde Gut, also insbesondere Glasware und/oder Blechware 100, in einen Aufnahmeraum 8 der Vorrichtung eingebracht wird, mittels einer dort vorgesehenen Wurfvorrichtung 1 beschleunigt wird und auf feststehende Zerkleinerungsmittel 11 trifft. Die Wurfvorrichtung 1 ist dabei vorteilhaft so gebildet, dass sie eine Begrenzung auf der gegenüberliegenden Seite der Einführöffnung 10 bildet, damit die eingebrachte Glasware und/oder Blechware 100 in einer möglichst optimalen Position zum Zerkleinern gehalten werden kann. Die Wurfvorrichtung 1 ist in Ruheposition P1 an der vom Zerkleinerungsbereich 9 entfernten Seite des Aufnahmeraums 8 angeordnet, begrenzt somit den Aufnahmeraum 8 zu der Seite hin, zu der das zu zerkleinernde Gut nicht bewegt werden soll und dient gleichzeitig als Führung zum Stoßen des zu zerkleinernden Guts in Richtung Zerkleinerungsbereich 9. Beim Auftreffen auf die Zerkleinerungsmittel 11 wird die Glasware und/oder Blechware 100 dann vorteilhaft zumindest teilweise zerkleinert und die entstandenen Stücke fallen durch eine Bodenöffnung 3 der Vorrichtung in einen Auffangbehälter des Entsorgungscontainers. Selbst wenn die Glasware und/oder Blechware 100 nicht zerkleinert wird, kann sie als Ganzes durch die Bodenöffnung 3 fallen, da diese entsprechend groß gewählt ist. Die Zerkleinerungsmittel können mehrere, in Richtung des Zerkleinerungsbereichs 9 hervorstehende, spitz zulaufende Einheiten sein, z.B. Stahlkeile.

Das Beschleunigen wird durch Verwenden einer Spannvorrichtung 2 realisiert, welche die Wurfvorrichtung 1 von einer Ruheposition P1 in eine Endposition P2 beschleunigt, wie in Figur 1 durch die Pfeile angedeutet, so dass die im Aufnahmeraum 8 vorhandene Glasware und/oder Blechware 100 in Richtung der Zerkleinerungsmittel 11 beschleunigt wird. Dies wird realisiert, da durch Betätigen des Betätigungshebels 12 die Spannvorrichtung 2 gelöst wird, so dass sie die die Wurfvorrichtung 1 in Richtung des Zerkleinerungsbereichs 9 bewegt wird und diese in die Endposition P2 bringt. Da die Spannvorrichtung 2 die Energie schnell abgibt, erfolgt eine Beschleunigung der Wurfvorrichtung 1 und damit die Glasware und/oder Blechware 100 in Richtung Zerkleinerungsbereich 9 und Zerkleinerungsmittel 11.

Die in Figur 1 gezeigte Endposition P2 ist lediglich beispielhaft gezeichnet. Die Endposition P2 kann auch erst kurz vor Erreichen der Zerkleinerungsmittel 11 erreicht sein, je nach Ausführung der Vorrichtung.

Um die Spannvorrichtung 2 zu betätigen, ist ein Betätigungshebel 12 vorgesehen, der einen Bedienbereich aufweist, der nach außerhalb der Vorrichtung reicht und von einem Nutzer betätigt werden kann.

Die Wurfvorrichtung 1 ist mittels Führungsmitteln 7 geführt, die je nach Konstruktion der Vorrichtung unterschiedlich gebildet sind, wie nachfolgend beschrieben. Sie haben aber immer dieselbe Wirkung, nämlich die Wurfvorrichtung 1 derart von der Ruheposition P1 in die Endposition P2 zu führen, dass die Glasware und/oder Blechware 100 in den Zerkleinerungsbereich 9 befördert wird und auf die Zerkleinerungsmittel 11 trifft.

Vorteilhaft ist zum Schutz der Nutzer in allen Ausführungen eine als Schutzklappe oder Schiebetüre ausgeführte Schutzvorrichtung 13 vorgesehen, welche die Einführöffnung 10 verschließt, bevor der Zerkleinerungsvorgang starten kann. Diese Schutzvorrichtung 13 wird über einen (nicht gezeigten) Seilzug bewegt, der mit dem Betätigungshebel 12 gekoppelt ist. Wenn der Betätigungshebel 12 betätigt wird, wird auch die Schutzvorrichtung 13 bewegt. Wenn der Betätigungshebel 12 am Anschlag 16 anstößt, ist die Schutzvorrichtung 13 soweit bewegt, dass sie die Einführöffnung 10 verdeckt. Außerdem kann z.B. über eine mit dem Betätigungshebel 12 gekoppelte Einrichtung wie eine Welle ein Auslösen der Wurfvorrichtung 1 verhindert werden, indem ein Auslösemechanismus 6 zum Lösen der Spannvorrichtung 2 solange blockiert wird, bis die Schutzvorrichtung 13 die Einführöffnung 10 vollständig verschlossen hat.

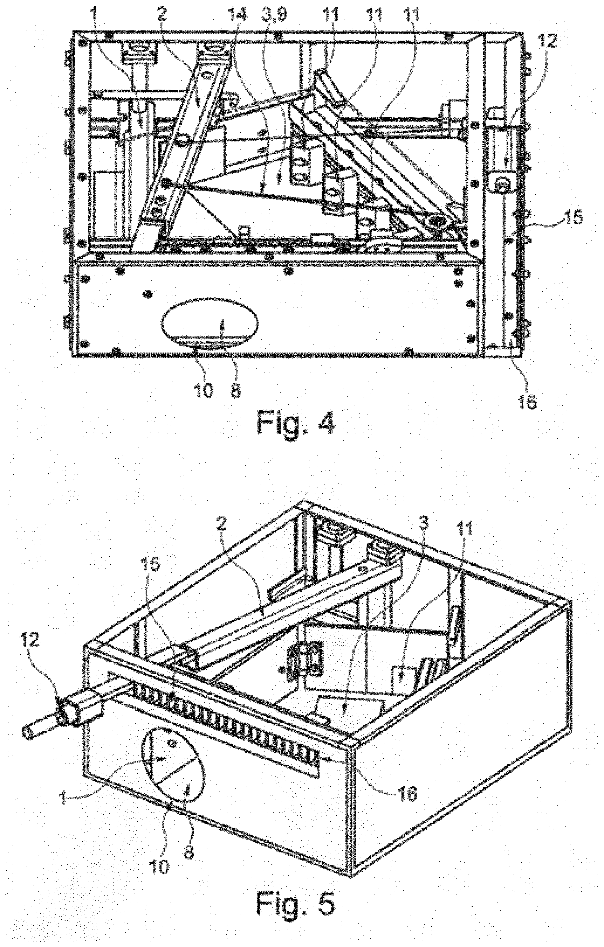

Der Betätigungshebel 12 kann sowohl in horizontaler Richtung als auch in vertikaler Richtung bewegt werden. Um den Betätigungshebel 12 in vertikaler Richtung zu bewegen, sind Umlenkmittel 14 vorgesehen, die z.B. als möglichst robuster Seilzug 14 mit zugehörigen Rollen ausgeführt sind, wie in Figur 4 gezeigt.

Die Vorrichtung ist vorteilhaft in einem Gehäuse angeordnet, das z.B. als stabiler Rahmen, z.B. Stahlrahmen mit Seitenwänden, gebildet ist, was die Konstruktion stabilisiert und einfacher montierbar macht. Die Seitenwände können zur weiteren Stabilisierung z.B. mit einem Blech ausgekleidet sein. Alternativ eignen sich auch andere Materialien. Der Betätigungshebel 12 ragt mit seinem Bedienbereich aus dem Gehäuse heraus, so dass ein Nutzer diesen betätigen kann. Außerdem ist einer Seitenwand des Gehäuses ferner ein Ausschnitt 15 derart vorgesehen, dass er den Verfahrweg des Betätigungshebels 12 ermöglicht. Vorteilhaft weist der Entsorgungscontainer einen dazu korrespondierenden Ausschnitt aus, damit der Betätigungshebel 12 nach außen geführt und betätigt werden kann. Die Ausschnitte sind je nach Ausführung des Betätigungshebels 12 horizontal, wie in Figur 5 gezeigt, oder vertikal angeordnet, wie in Figur 4 gezeigt.

Die Einführöffnung 10 ist vorteilhaft rund ausgebildet und weist einen Durchmesser von 150 mm oder 130 mm auf. Je nach Anwendung können auch andere Durchmesser gewählt werden.

Des Weiteren ist vorgesehen, dass die Vorrichtung ausgehend von der Einwurföffnung des Entsorgungscontainers maximal bis zu einer gedachten senkrechten Mittellinie des Entsorgungscontainers reicht. Das Gehäuse ist in seiner Größe so gewählt, dass der Aufnahmeraum ein vorgegebenes Volumen oder eine vorgegebene Größe an Glasware oder Blechware aufnehmen kann. Beispielsweise ist der Aufnahmeraum so gewählt, dass Glasware oder Blechware z.B. mit einem Durchmesser von bis zu 130 mm oder 150 mm darin eingebracht werden können. Besonders vorteilhaft ist die Größe der gesamten Vorrichtung so gewählt, dass sie nicht über die gedachte Mittellinie des Entsorgungscontainers reicht, z.B. maximal dem Radius oder halben Breite des Entsorgungscontainers entspricht. Dies ist deshalb vorteilhaft, da solche Entsorgungscontainer in der Regel auf zwei einander gegenüberliegenden Seiten davon Einwurföffnungen aufweisen bzw. von zwei einander gegenüberliegenden Seiten erreichbar sind. Durch die entsprechende Wahl der Größe der Vorrichtung können somit zwei Vorrichtungen an einem Entsorgungscontainer angeordnet werden.

Nachfolgend werden unterschiedliche Ausführungsbeispiele beschrieben, wobei hier hauptsächlich auf die unterschiedlichen konstruktiven Ausgestaltungen eingegangen wird. Die Funktionsweise und das Grundkonzept bleiben dasselbe wie oben beschrieben.

Figur 2 zeigt eine schräge Draufsicht auf eine Ausführung der Vorrichtung, bei der die Führungsmittel 7 als zwei Schienen ausgeführt sind, die jeweils an einem oberen Endbereich der Wurfvorrichtung 1 befestigt sind. Das heißt, dass die Wurfvorrichtung 1 mittels einem Linearantrieb von der Ruheposition P1 durch die Spannvorrichtung 2 in die Endposition P2 bewegt wird. Die Zerkleinerung erfolgt hier, indem die Glasware und/oder Blechware 100 durch die Einführöffnung 10 in den Aufnahmeraum 8 eingebracht wird. Dann wird der (nicht gezeigte) Betätigungshebel 12 betätigt. Damit wird die in Ruheposition P1 befindliche und durch die Spannvorrichtung 2 bewegbare Wurfvorrichtung 1, die hier als Wurfschlitten gebildet ist, in die Endposition P2 gebracht, so dass die Glasware und/oder Blechware 100 auf die Zerkleinerungsmittel 11 trifft und dort vorteilhaft zerkleinert wird.

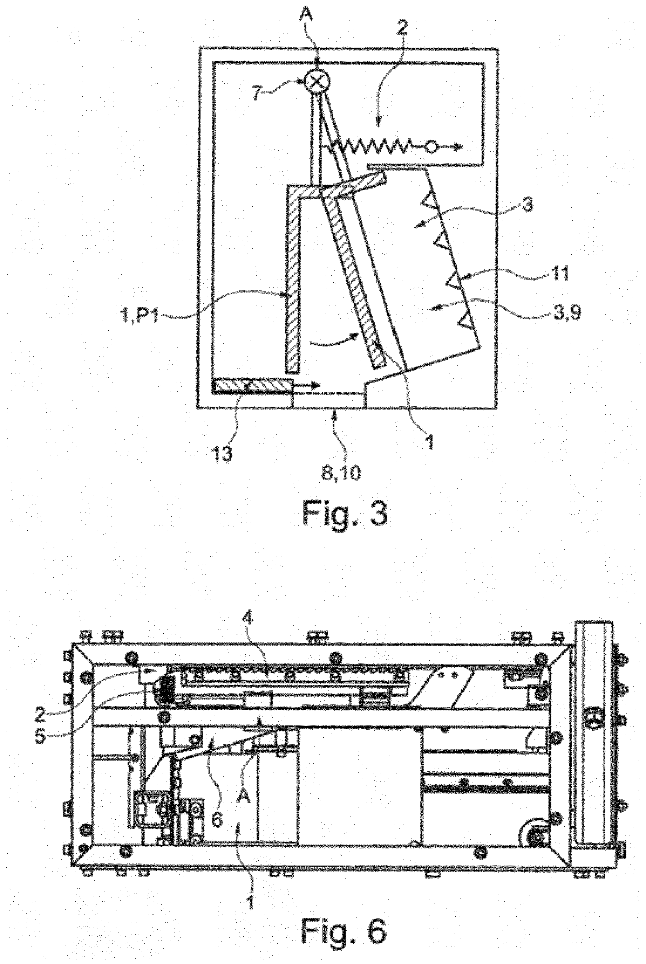

Figur 3 zeigt eine alternative Ausführung der Vorrichtung als abstrahierte, schematische Draufsicht, bei der die Führungsmittel 7 als Kugellager ausgeführt sind. So wird die Wurfvorrichtung 1 zum drehbar gelagerten Wurfarm, der über die Einführöffnung 10 in den Aufnahmeraum 8 eingebrachte Glasware und/oder Blechware 100 in Richtung Zerkleinerungsbereich 9 bewegt, wenn die Spannvorrichtung 2 gelöst wird.

Vorteilhaft an dieser Ausführung ist, dass Kugellager wesentlich höhere Radial- sowie Axialkräfte im Vergleich zu einem Linearantrieb aufnehmen können, und auch im Wesentlichen wartungsfrei sind. Außerdem ist das Kugellager außerhalb des Zerkleinerungsbereichs 9 und ist damit vor Verschmutzung und Beschädigung geschützt. Dasselbe gilt für die Spannvorrichtung 2, da diese auch außerhalb des Zerkleinerungsbereichs 9 angeordnet werden kann. Zusätzlich ist weiter vorteilhaft, dass die Spannvorrichtung 2, wenn sie als Feder ausgeführt ist, wesentlich kürzere Federn nutzen kann, da diese näher am Drehpunkt A der als s Wurfarm gebildeten Wurfvorrichtung 1 befestigt werden können. Ferner kann durch diese Anordnung Bauraum in der Höhe eingespart werden, da die Führungsmittel 7, also das Kugellager, und die anderen Komponenten nicht mehr oberhalb des Aufnahmeraums 8, sondern dahinter angeordnet werden können.

In Figuren 4 bis 8 werden konstruktive Details der in Figur 3 gezeigten Ausführung dargestellt und genauer erläutert.

Figuren 4 und 5 zeigen eine schräge Draufsichten auf zwei unterschiedliche Ausführungen der Vorrichtung, wobei der einzige Unterschied darin liegt, dass in Figur 4 der Betätigungshebel 12 vertikal bedient wird, also der Ausschnitt 15 vertikal angeordnet ist, und in Figur 5 der Betätigungshebel 12 horizontal bedient wird, also der Ausschnitt 15 horizontal angeordnet ist.

In Figur 4 ist auch ein als Seilzug mit Umlenkrollen gebildetes Umlenkmittel 14 mit zugehörigen Umlenkrollen dargestellt, der eine Umwandlung einer vertikalen Bewegung des Betätigungshebels 12 in eine horizontale Bewegung der Spannvorrichtung 2, welche eine daran befestigte und nicht gezeigte Feder umfasst und damit auch gleichzeitig als Führungsmittel dient, realisiert. In Figur 5 ist der Betätigungshebel 12 als Verlängerung der Spannvorrichtung 2, welche eine daran befestigte und nicht gezeigte Feder umfasst und damit auch gleichzeitig als Führungsmittel dient, vorgesehen und es wird keine Umlenkvorrichtung benötigt.

Figur 6 zeigt eine seitliche Schnittdarstellung der in Figur 4 gezeigten Ausführung, bei der ein Mechanismus gezeigt ist, um ein Zurückschlagen des Betätigungshebels 12 zu vermeiden. Hierfür ist ein Rastmechanismus vorgesehen. Am Ende der Spannvorrichtung 2 ist ein Zahn vorgesehen, welcher beim Spannen über Rasten 4 läuft. Diese werden durch eine Feder 5 nach oben gedrückt, so dass der Zahn in die Rasten 4 einrasten kann. So wird die Spannvorrichtung 2 daran gehindert, in die Ausgangsposition zurückzuschnellen, wenn der Betätigungshebel 12 nicht mehr bedient wird. Die Verrastung kann z.B. durch Betätigen eines (nicht gezeigten) Schalters oder Knopfs gelöst werden, der z.B. am Betätigungshebel 12 vorgesehen ist. Wenn der Betätigungshebel 12 vollständig betätigt wird, also bis zu einem Anschlag 16, drückt die Spannvorrichtung 2, welche hier als Spannhebel (der als Führungsmittel dient) mit einer nicht gezeigten Feder ausgeführt ist, einen Auslösemechanismus 6 an der rechten Seite herunter und dreht diesen um den Drehpunkt A des Kugellagers, wodurch sich die linke Seite nach oben bewegt. Somit wird die Wurfvorrichtung 1, hier also der Wurfarm, freigegeben.

Nachfolgend wird nochmal das Funktionsprinzip der in Figuren 4 bis 6 gezeigten Ausführungen beschrieben. In der Ausgangsposition befindet sich der Betätigungshebel 12 in einer Anfangsposition, hier also z.B. ganz links oder ganz oben. Dabei befindet sich die Wurfvorrichtung 1 auf der Seite der Einführöffnung 10, die vom Zerkleinerungsbereich 9 entfernt ist, wie in den Figuren 4 und 5 gezeigt. In diesem Zustand kann Glasware und/oder Blechware 100 in den Aufnahmeraum 8 eingebracht werden. Dann wird der Betätigungshebel 12 betätigt. Während der Betätigung schließt sich die mit dem Betätigungshebel 12 gekoppelte Schutzvorrichtung 13, welche von einer Feder in der geschlossenen Position gehalten wird. Nachdem die Schutzvorrichtung 13 vollständig geschlossen ist, d.h. der Betätigungshebel 12 am Anschlag 16 ist, löst dies den Auslösemechanismus 6 aus, der die Spannvorrichtung 2 freigibt und damit die Wurfvorrichtung 1 auslöst. Somit wird die im Aufnahmeraum 8 befindliche Glasware und/oder Blechware 100 in Richtung des Zerkleinerungsbereichs 9 beschleunigt, trifft auf die Zerkleinerungsmittel 11 und wird vorteilhaft zerkleinert. Hierbei wird sie auch durch die Wurfvorrichtung 1 gegen die Zerkleinerungsmittel 11 gedrückt. Die zerkleinerten Teile fallen dann durch die Bodenöffnung 3 in den darunter befindlichen Auffangbehälter des Entsorgungscontainers. Selbst wenn keine Zerkleinerung erfolgt, fällt die Glasware und/oder Blechware 100 durch die Bodenöffnung 3, da diese entsprechend große gewählt ist, und blockiert damit nicht den Zerkleinerungsmechanismus.

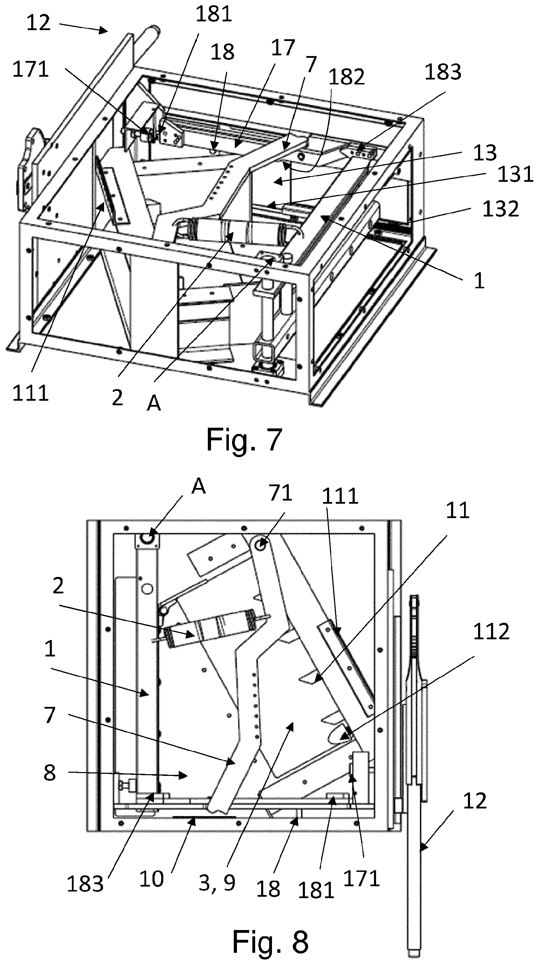

In Figuren 7 und 8 ist eine weitere Ausführung der Vorrichtung zur Zerkleinerung von Glasware und/oder Blechware 100 gezeigt, welche das Prinzip wie in Figur 3 gezeigt, umsetzt. Figur 7 ist eine schräge Hinteransicht des Innenbereichs (also mit offenen Seitenwänden) und Figur 8 ist eine schematische Draufsicht.

Das Funktionsprinzip ist wie bereits für Figur 3 beschrieben. Vorgesehen ist hierbei ein zentrales Führungsmittel 7, das als über einen vorgegebenen Rotationspunkt 71 drehbarer Arm gebildet ist, an dem die Wurfvorrichtung 1 über ein als Spannvorrichtung 2 dienendes Federelement befestigt ist. Der Rotationspunkt 71 befindet sich an einem Endabschnitt des Führungsmittels 7, an dem auch die Spannvorrichtung 2 befestigt ist. An dem anderen Endabschnitt ist das Führungsmittel 7 an einer vorteilhaft am Rahmen des Gehäuses vorgesehenen Wippe 17 verschiebbar angeordnet.

Der Betätigungshebel 12 ist an einem äußeren Seitenbereich des Gehäuses angeordnet und mit dem Führungsmittel 7 und damit mit der Wurfvorrichtung 1 über ein (nicht gezeigtes) Betätigungsmittel verbunden. Dieses kann z.B. als Bowdenzug ausgeführt sein, der vom Betätigungshebel 12 abgehend durch eine Öffnung in der Seitenwand des Gehäuses ins Innere des Gehäuses geführt ist und an einem vordefinierten Bereich des Führungsmittels 7 befestigt ist. Die genaue Anbringung an dem Führungsmittel 7 hängt von einigenden Faktoren ab, die unter anderem abhängig von der Verwendung der Vorrichtung, von der Federkraft der Feder (Spannvorrichtung 2) und der Länge des Betätigungshebels 12 sind. Um einen Ankerpunkt für das Betätigungsmittel, insbesondere eines Bowdenzuges, bereitzustellen, kann zwischen dem Führungsmittel 7 und der Seitenwand des Gehäuses, an welcher der Betätigungshebel 12 angeordnet ist, noch ein weiterer, feststehender Arm vorgesehen sein. Sowohl am Führungsmittel 7 als auch an dem weiteren, feststehender Arm können mehrere Ankerpunkte 111 zur Führung (am weiteren, feststehender Arm) bzw. Befestigung (am Führungsmittel 7) vorgesehen sein, welche die Kraftübertragung einstellbar machen. Somit ist die Vorrichtung flexibler.

Zur Absicherung, dass nach Ablegen des zu zerstörenden Gutes, also Glasware oder Blechware 100, nichts mehr in die Einführöffnung 10 gelangen kann, z.B. eine Hand, ist eine Schutzvorrichtung 13 vorgesehen. Diese Schutzvorrichtung 13 ist derart mit dem Führungsmittel 7 wirkverbunden, dass sie während der Betätigung des Führungsmittels 7 die Einführöffnung 10 verschließt. Das heißt, dass die Wurfvorrichtung 1 solange blockiert ist, bis die Schutzvorrichtung 13 die Einführöffnung 10 verschließt.

Die Schutzvorrichtung 13 kann z.B. als Schiebeelement ausgeführt sein und über eine Schiene 131 und Federelement 132 geführt sein, wie in Figur 7 angedeutet.

Die Funktionsweise ergibt sich aus der obigen Beschreibung und den Figuren. Wenn der Betätigungshebel 12 in einer Ruheposition ist, ist die Einführöffnung 10 offen und eine Glasware oder Blechware 100 kann in den Aufnahmeraum 8 eingelegt werden. Sobald der Betätigungshebel 12 bewegt wird, bewegt sich das Führungsmittel 7 aufgrund des Betätigungsmittels, z.B. einem Bowdenzug, an einem Ende um den Rotationspunkt 71 und am anderen Ende entlang der Wippe 17 (von der Wurfvorrichtung 1 weg) und spannt die Feder (Spannvorrichtung 2). Gleichzeitig bewegt sich die Schutzvorrichtung 13 in Richtung Einführöffnung 10. Sobald das Führungsmittel 7 einen vorgegebenen Endpunkt (Auslösemittel 181) erreicht hat, wird die Wurfvorrichtung 1 freigegeben und schleudert die im Aufnahmeraum 8 befindliche Glasware oder Blechware 100 gegen die Zerkleinerungsmittel 11. Dies kann aufgrund der Konstruktion und dem Zusammenspiel zwischen Führungsmittel 7 und Einführöffnung 10 erst erfolgen, wenn die Einführöffnung 10 vollständig verschlossen ist.

Die Freigabe der Wurfvorrichtung 1 erfolgt in dieser Ausführung, indem in Spannrichtung des Führungsmittels 7 und an einem Endbereich der Wippe 17 ein Auslösemittel 181 vorgesehen ist. Dieses Auslösemittel 181 kann z.B. in Form einer Rampe ausgeführt sein, wie in Figur 7 gezeigt. Wenn das Führungsmittel 7 dieses erreicht und betätigt (in Figur 7 über die Rampe fährt), wird die Wurfvorrichtung 1 über die Wippe 17 freigegeben. Dies geschieht, indem sich die Wippe 17 durch das Bewegen des Führungsmittels 7 bewegt (also kippt) und damit ein zur Blockade der Wurfvorrichtung 1 vorgesehenes Blockademittel 183 die Wurfvorrichtung 1 freigibt.

Zur Absicherung, dass die Wurfvorrichtung 1 tatsächlich erst freigegeben wird, wenn die Einführöffnung 10 verschlossen ist, kann ein Sicherungsmittel 18 vorgesehen sein. Dabei kann das Sicherungsmittel 18 als Führungsstift vorgesehen sein, das bei Bewegen des Führungsmittels 7 in die entgegengesetzte Richtung davon bewegt wird. Alternativ kann das Sicherungsmittel 18 an der Schutzvorrichtung 13 befestigt sein und sich bei Bewegung der Schutzvorrichtung 13 entlang der Schiene 131 mitbewegen. Die Führung des Sicherungsmittels 18 kann ebenfalls über einen Bowdenzug erfolgen, der mit dem Betätigungshebel 12 in Wirkverbindung steht. An einem geeigneten Bereich der Wippe 17, welcher von der Gesamtkonstruktion der Vorrichtung abhängt, befindet sich eine Rampe 182, welche als Freigabe für das Sicherungsmittel 18 dient. Erst wenn das Sicherungsmittel 18 sich über die Rampe 182 bewegt hat, kann die Wippe 17 kippen und damit die Wurfvorrichtung 1 durch Freigeben des Blockademittels 183 freigeben.

Das Blockademittel 183 ist vorteilhaft an dem Ende der Wippe 17 vorgesehen, das zur Wurfvorrichtung 1 weist. Es ist derart gebildet, dass es die Wurfvorrichtung 1 solange in ihrer Position hält, bis die Wippe 17 das Blockademittel 183 freigibt, also auf der entgegengesetzten Seite davon an dem Auslösemittel 181 anschlägt, wodurch die Wippe 17 soweit gekippt wird, dass das Blockademittel 183 freigegeben wird.

Als Endpunkt des Führungsmittels 7 kann ein Anschlagpunkt 171 vorgesehen sein.

Durch die Freigabe der Wurfvorrichtung 1 entspannt sich die Feder (Spannvorrichtung 2) wieder und nimmt die freigegebene Wurfvorrichtung 1 dafür in Richtung Zerkleinerungsmittel 11 mit. Je nach Federkraft der Spannvorrichtung 2 erfolgt dies in einer bestimmten Beschleunigung bzw. Geschwindigkeit.

Um ein zu schnelles Zurückkehren des Betätigungshebels 12 in seine Endposition und damit ein mögliches Verletzen eines Bedieners zu vermeiden, können entsprechende Feststellmittel vorgesehen sein. Diese können manuell durch Betätigen einer entsprechenden Vorrichtung, z.B. einem Knopf, gelöst werden.

Zur Absicherung, dass die Wurfvorrichtung 1 nicht durch die Zerkleinerungsmittel 11 beschädigt wird, wenn sich keine Glas- oder Blechware 100 im Aufnahmeraum 8 befindet, kann ein Anschlag 112 vorgesehen sein, der ebenso wie die Zerkleinerungsmittel 11 in Richtung Wurfvorrichtung 1 weist und eine etwas größere Länge wie die Zerkleinerungsmittel 11 aufweist. Somit würde die Wurfvorrichtung 1 an dem Anschlag 112 anschlagen und nicht beschädigt werden.

Im Gegensatz zu den in Figuren 1 und 2 gezeigten Ausführungen erfolgt die Führung der Wurfvorrichtung 1 nicht auf Schienen, sondern sie ist über einen Drehpunkt A drehbar am Gehäuse befestigt. Somit wird die Glasware oder Blechware 100 in einem Radius, also nicht linear, gegen die entsprechend angeordneten Zerkleinerungsmittel 11 geführt. Vorteilhaft sind die Zerkleinerungsmittel 11 so angeordnet, dass die Wurfvorrichtung 1 möglichst kurz vor Erreichen der Zerkleinerungsmittel 11 parallel dazu ist.

Wenn zwei Vorrichtungen in einem Entsorgungscontainer einander gegenüberliegend angeordnet werden sollen, können diese in demselben Gehäuse verbaut sein oder zwei separate Gehäuse aufweisen, die miteinander verbunden sind.

### Bezugszeichenliste

- 1: Wurfvorrichtung
- 2: Spannvorrichtung
- 3: Bodenöffnung
- 4: Rasten
- 5: Feder
- 6: Auslösemechanismus
- 7: Führungsmittel
- 71: Rotationspunkt
- 8: Aufnahmeraum
- 9: Zerkleinerungsbereich
- 10: Einführöffnung
- 11: Zerkleinerungsmittel
- 111: Ankerpunkte
- 112: Anschlag
- 12: Betätigungshebel
- 13: Schutzvorrichtung
- 131: Schiene
- 132: Federelement
- 14: Umlenkmittel
- 15: Ausschnitt
- 16: Anschlag
- 17: Wippe
- 171: Anschlagpunkt
- 18: Sicherungsmittel
- 181: Auslösemittel
- 182: Rampe
- 183: Blockademittel
- 100: Glasware und/oder Blechware
- D1: Abstand
- A: Drehpunkt
- P1, P2: Ruheposition, Endposition

## Patentansprüche

1. Vorrichtung zur Zerkleinerung von Glasware und/oder Blechware (100), wobei die Vorrichtung zur Anordnung in oder auf einem entsprechenden Entsorgungscontainer vorgesehen ist, und aufweist:
- einen Aufnahmeraum (8) mit zumindest teilweise geschlossenem Boden zur Aufnahme der Glasware und/oder Blechware (100),
- eine Einführöffnung (10) in den Aufnahmeraum (8),
- einen an den Aufnahmeraum (8) direkt anschließenden Zerkleinerungsbereich (9), der zumindest teilweise eine Bodenöffnung (3) aufweist,
- eine Wurfvorrichtung (1), die in einer Ruheposition (P1) an einem vom Zerkleinerungsbereich (9) entfernten Bereich des Aufnahmeraums (8) angeordnet ist,
- Führungsmittel (7), an denen die Wurfvorrichtung (1) befestigt ist, und die derart angeordnet sind, dass sie die Wurfvorrichtung (1) von der Ruheposition (P1) in eine Endposition (P2) und wieder zurück führen können,
- einen Betätigungshebel (12), der in einer Anfangsposition ist, wenn sich die Wurfvorrichtung (1) in der Ruheposition (P1) befindet,
- Zerkleinerungsmittel (11), die in einem vorgegebenen Abstand (D1) zum Aufnahmeraum (8) befestigt sind und mindestens einen Teilbereich der Bodenöffnung (3) überlappen,
- eine Spannvorrichtung (2), die derart mit der Wurfvorrichtung (1) und dem Betätigungshebel (12) in Wirkverbindung ist, dass sie bei Betätigen des Betätigungshebels (12) freigegeben wird und die Wurfvorrichtung (1) dabei in Richtung der Zerkleinerungsmittel (11) bis zum Erreichen der Endposition (P2) beschleunigt wird, wobei dadurch Glasware und/oder Blechware (100), die sich im Aufnahmeraum (8) befindet, auf die Zerkleinerungsmittel (11) trifft und die Vorrichtung durch die Bodenöffnung (3) verlässt.

2. Vorrichtung Zerkleinerung von Glasware und/oder Blechware (100) nach Anspruch 1, wobei die Vorrichtung ferner eine Schutzvorrichtung (13) aufweist, die mit dem Betätigungshebel (12) in Wirkverbindung steht, wobei die Schutzvorrichtung (13) derart angeordnet ist, dass sie in der Anfangsstellung des Betätigungshebels (12) in einer Offenstellung ist, in welcher die Einführöffnung (10) zugänglich ist, und dass sie bei Betätigung des Betätigungshebels (12) in eine geschlossene Stellung bewegt wird, in welcher Einführöffnung (10) durch die Schutzvorrichtung (13) verdeckt ist.

3. Vorrichtung Zerkleinerung von Glasware und/oder Blechware (100) nach einem der vorhergehenden Ansprüche, wobei die Führungsmittel (7)
- als zwei Schienen ausgeführt sind, die jeweils an einem oberen Endbereich der Wurfvorrichtung 1 befestigt sind, oder
- als Kugellager ausgeführt sind.

4. Vorrichtung Zerkleinerung von Glasware und/oder Blechware (100) nach einem der Ansprüche 1 oder 2, wobei
- das Führungsmittel (7) über einen Rotationspunkt (71) an einem Endbereich davon drehbar angeordnet ist und
- der Betätigungshebel (12) über ein Betätigungsmittel an dem Führungsmittel (7) befestigt ist, und wobei
- die Spannvorrichtung (2) an einem Endbereich davon mit einem ersten Endabschnitt des Führungsmittels (7) und an einem zweiten Endabschnitt davon mit der Wurfvorrichtung (1) derart verbunden ist, dass bei Bewegen des Führungsmittels (7) durch den Betätigungshebel (12) die Spannvorrichtung (2) gespannt wird, und bei Erreichen eines Endpunktes die Wurfvorrichtung (1) freigegeben und die Spannvorrichtung (2) entspannt wird, so dass die Glasware und/oder Blechware (100), die sich im Aufnahmeraum (8) befindet, auf die Zerkleinerungsmittel (11) trifft und die Vorrichtung durch die Bodenöffnung (3) verlässt.

5. Vorrichtung Zerkleinerung von Glasware und/oder Blechware (100) nach Anspruch 4, wobei eine Wippe (17) an dem zweiten Endabschnitt des Führungsmittels (7) derart angeordnet ist, dass es sich zwischen der Wurfvorrichtung (1) und einem gegenüberliegenden Ende erstreckt und dort ein Auslösemittel (181) vorgesehen ist, und wobei an dem Ende der Wippe (17), an dem sich die Wurfvorrichtung (1) befindet, ein Blockademittel (183) vorgesehen ist, wobei das Führungsmittel (7) entlang der Wippe (17) verschiebbar ist und wobei die Wippe (17) durch Bewegen des Führungsmittels (7) in Richtung des Auslösemittels (181) und bei Erreichen des Auslösemittel (181) derart gekippt wird, dass das Blockademittel (183) von der Wurfvorrichtung (1) entfernt wird und diese damit freigibt.

6. Vorrichtung Zerkleinerung von Glasware und/oder Blechware (100) nach Anspruch 4 oder 5, wobei das Betätigungsmittel als Bowdenzug ausgeführt ist.

7. Vorrichtung Zerkleinerung von Glasware und/oder Blechware (100) nach einem der Ansprüche 4 bis 6, wobei eine Schutzvorrichtung (13) vorgesehen ist, die über das Führungsmittel (7) mit dem Betätigungshebel (12) in Wirkverbindung steht, wobei die Schutzvorrichtung (13) derart angeordnet ist, dass sie in der Anfangsstellung des Betätigungshebels (12) in einer Offenstellung ist, in welcher die Einführöffnung (10) zugänglich ist, und dass sie bei Betätigung des Betätigungshebels (12) während der Bewegung des Führungsmittels (7) in eine geschlossene Stellung bewegt wird, in welcher Einführöffnung (10) durch die Schutzvorrichtung (13) verdeckt ist.

8. Vorrichtung Zerkleinerung von Glasware und/oder Blechware (100) nach Anspruch 7, wobei ein Sicherungsmittel (18) vorgesehen ist, das derart mit der Schutzvorrichtung (13) und der Wurfvorrichtung (1) in Wirkverbindung steht, dass es die Wurfvorrichtung (1) blockiert, bis die Schutzvorrichtung (13) die Einführöffnung (10) verschlossen hat.

9. Vorrichtung Zerkleinerung von Glasware und/oder Blechware (100) nach einem der vorhergehenden Ansprüche, wobei der Betätigungshebel (12)
- horizontal betätigbar ist, oder
- vertikal betätigbar ist und hierfür Umlenkmittel (14) vorgesehen sind, die den Betätigungshebel (12) mit der Spannvorrichtung (2) verbinden.

10. Vorrichtung Zerkleinerung von Glasware und/oder Blechware (100) nach einem der vorhergehenden Ansprüche, wobei die Zerkleinerungsmittel (11) mehrere, in Richtung des Zerkleinerungsbereichs (9) hervorstehende, spitz zulaufende Einheiten sind.

11. Vorrichtung Zerkleinerung von Glasware und/oder Blechware (100) nach einem der vorhergehenden Ansprüche, wobei die Wurfvorrichtung (1) derart gebildet ist, dass sie das Ende des Aufnahmeraums (8), welches der Einführöffnung (10) gegenüberliegt, begrenzt.

12. Vorrichtung Zerkleinerung von Glasware und/oder Blechware (100) nach einem der vorhergehenden Ansprüche, wobei die Vorrichtung den maximal bis zu einer gedachten Mittellinie des Entsorgungscontainers reicht.

13. Vorrichtung Zerkleinerung von Glasware und/oder Blechware (100) nach einem der vorhergehenden Ansprüche, aufweisend ein Gehäuse, das die Vorrichtung aufnimmt und das an einer ersten Seite davon die Einführöffnung (10) aufweist, und das an einer dem Boden des Entsorgungscontainers zugewandten Unterseite des Zerkleinerungsbereichs (9) die Bodenöffnung (3) aufweist.

14. Entsorgungscontainer, aufweisend eine darin befestigte Vorrichtung nach einem der vorhergehenden Ansprüche, wobei der Entsorgungscontainer mindestens eine Einwurföffnung, sowie eine Hebel-Öffnung und einen Ausschnitt zum Betätigen des Betätigungshebels (12) aufweist, und wobei der Betätigungshebel (12) derart angeordnet ist, dass er mit einem Bedienbereich davon aus der Hebel-Öffnung herausragt.

15. Entsorgungscontainer, aufweisend eine darauf befestigte, in einem Gehäuse mit einer Hebel-Öffnung und einem Ausschnitt zum Betätigen des Betätigungshebels angeordnete Vorrichtung nach einem der Ansprüche 1 bis 13, wobei der Betätigungshebel (12) derart angeordnet ist, dass er mit einem Bedienbereich davon aus dem Gehäuse herausragt, und wobei der Entsorgungscontainer an einer Oberseite davon mindestens eine, mit der Bodenöffnung (3) der Vorrichtung in Überdeckung gebrachte Öffnung aufweist.
